# EUROPEAN PATENT SPECIFICATION

(11) **EP 1 764 017 B1**
(45) Date of publication and mention of the grant of the patent: **23.01.2008**
(21) Application number: 05257556.0
(22) Date of filing: 08.12.2005
(51) Int. Cl.: A47J 43/24, A47J 43/22

(54) **Strainer**
Sieb
Tamis

(43) Date of publication of application: 21.03.2007
(73) Proprietor: Clever Edge, Inc., Collinsville, CT 06019 (US)
(72) Inventor: Repp, Timothy Corcoran, Pleasant Valley, CT 06063 (US); Murphy, Bernard Thomas, Arlington, TX 76013 (US)
(74) Representative: Vleck, Jan Montagu

(56) References cited:
- GB-A- 2 028 675
- US-A- 1 675 855
- US-A- 2 464 921
- US-B1- 6 202 542

## Description

### Background of the Invention

The present invention relates to strainers, and more particularly to a strainer that employs a flexile, perforated membrane allowing it to axially collapse to a minimum size when not in use.

### Summary of the Invention

Perforated strainers, also known in the food preparation art as colanders, are a conventional tool typically formed of a rigid, non-flexile material. A drawback of all rigid strainers and colanders is that their form requires a lot of storage space. The present invention provides a solution to that problem in the form of a strainer that employs a flexile, perforated membrane allowing it to axially collapse to a minimum size when not in use.

This space-saving feature becomes very useful, for example, in kitchens with minimal storage area, but more importantly, inside dishwashers where space is limited. Strainers in the prior art are notoriously difficult to clean by hand because of their perforations and cumbersome size. Size alone is a deterrent for placing them into a dishwasher, which leaves cleaning by hand as the best current option. This invention performs the duties of a full-sized colander but with the added benefit of axially-collapsing to a smaller, more efficient size for storage and dishwasher cleaning.

In the preferred embodiment of the invention shown herein, a rigid support frame with integral handle supports the flexile, perforated membrane that is shaped to facilitate the novel function of the invention. In another embodiment of the invention (not shown herein), the membrane is supported by a rigid support frame that has two sets of pivoting legs to provide a self-supporting strainer. The two pivoting leg assemblies are attached near hand grips at the perimeter of the membrane and may be manually rotated inward so that they become parallel to the support frame. This allows a full sized colander to fit into an unusually small storage space. Other equivalent methods of supporting the membrane are possible, and it is not intended to limit this invention to any particular means of membrane support.

Documents GB-2028675 and US-1675855 disclose strainers.

### Brief Description of the Drawings

A more complete understanding of the invention and its advantages will be apparent from a review of the Detailed Description in conjunction with the following Drawings, in which:
Figure 1 is a perspective view of a strainer which includes the present invention.
Figure 2 is a side view of the strainer of Figure 1 in its storage configuration.
Figure 3 is a top view of the strainer.
Figure 4 is a sectional view taken along lines 4-4 of Figure 3.
Figure 5 is a side view of the strainer in its use configuration.
Figure 6 is a partial bottom view of the strainer.
Figure 7 is a partially broken-away, expanded side view of the stiffening ring and hinge portion of the membrane.
Figure 8 is a partially broken-away, expanded side view of the perimeter of the membrane and support frame.

### Detailed Description

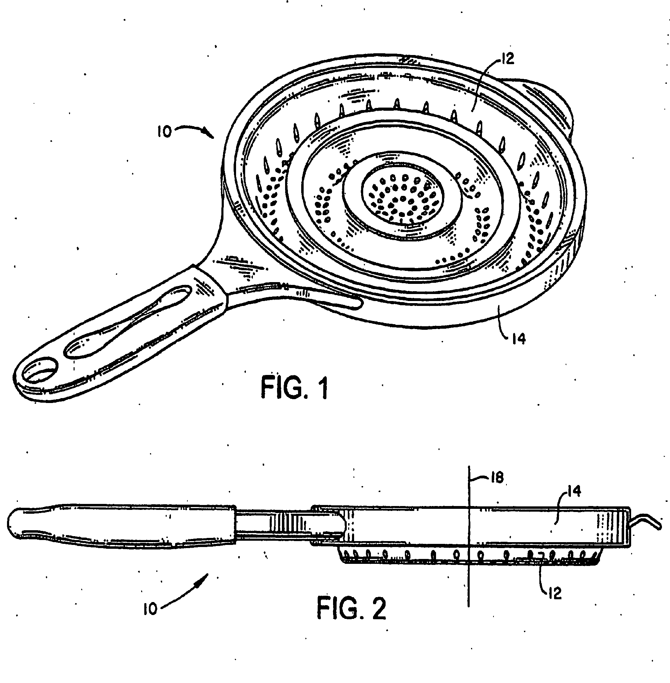

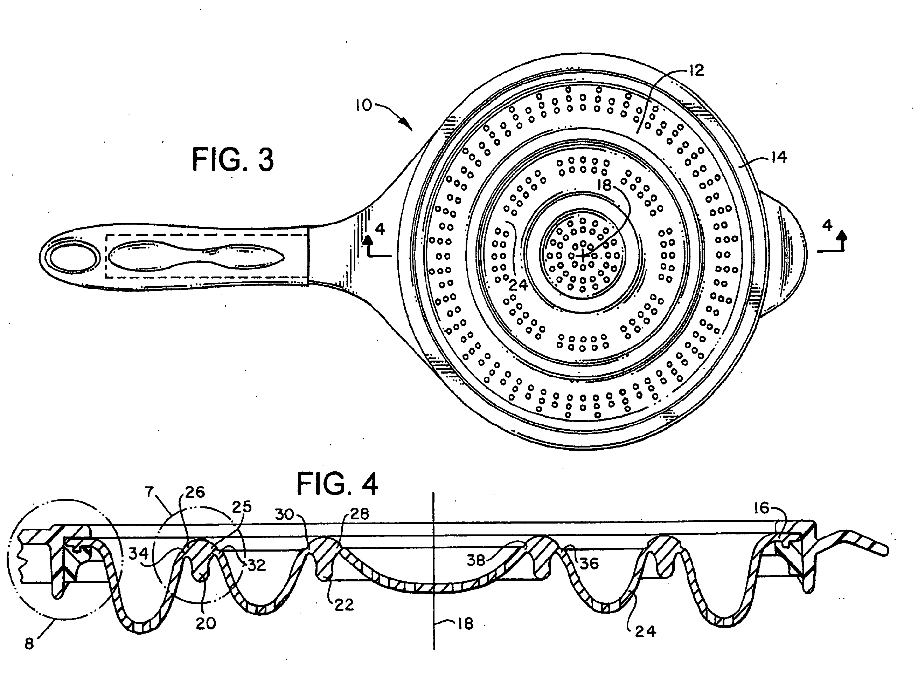

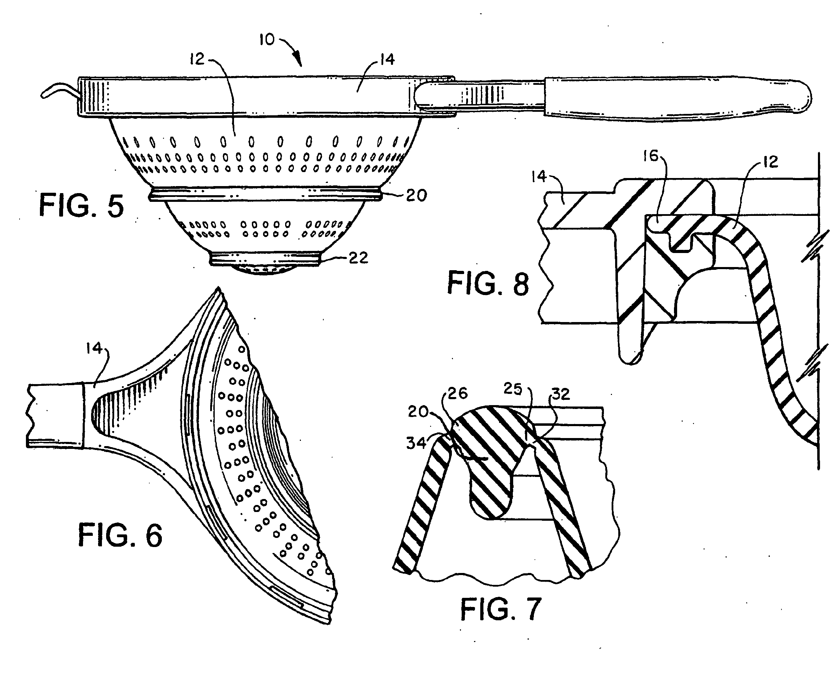

Referring initially to Figures 1-8, where like numerals indicate like and corresponding elements, strainer 10 includes a flexile, elastomeric, perforated membrane 12 supported by a rigid support frame 14 about a perimeter 16 (Figures 4 and 8) of the membrane 12. "Flexile" is used in its ordinary sense to mean easily bendable. The Oxford English Dictionary defines flexile as "easily bending or bent, pliant, supple, flexible".

The membrane 12 has at least two selectable configurations, as shown in Figures 2 and 5. The two selectable configurations are a near-flat storage configuration (Figure 2) and an extended use configuration (Figure 5). In the storage configuration, membrane 12 is approximately the same width as frame 14. In the use configuration, membrane 12 is extended from frame 14 to form an open-topped container or bowl.

A key feature of the invention is that membrane 12 is formed to be stable in both the storage and use configurations. This enables the user to select either configuration, which the membrane 12 will then statically hold indefinitely until it is shifted to the other configuration. One way to provide this feature is to form the membrane 12 to have circular cross-sections about a central axis 18 (Figures 2, 3 and 4). The membrane 12 includes at least one, and in this embodiment, two stiffening rings 20,22 formed in a wavy, medial portion 24 of the membrane 12. Stiffening ring 20 has inner side 24 and outer side 28. Stiffening ring 22 has inner side 26 and outer side 30. At least four hinges 32,34,36,38 are provided, one hinge on each of the inner and outer sides of each stiffening ring as shown in Figures 4 and 7. The hinges 32,34,36,38 are reduced in thickness compared to the perforated portions of membrane 12, such that they are even more flexile and deformable than the rest of the membrane. Stiffening rings 20,22 in contrast are relatively thick, so they are less flexile than the rest of the membrane and more strongly resist deformation. Stiffening rings 20,22 prevent the portions of membrane 12 adjacent to them from being in any state other than the storage and use configurations.

One example of the membrane 12 is formed of silicone rubber with a softness on the Shore A scale of about 25. The perforated portions of the membrane are about 2 mm thick, while the hinges are about 0.85 mm thick. The membrane has a diameter of about 20 cm.

In operation, in its storage configuration, the flexile, perforated membrane is in a near-flat shape, suspended at its perimeter by a support frame which, in this embodiment, includes a single radially-extending handle. For use, the strainer is taken from its storage space and brought to a sink. The user grips the handle and positions the membrane over the sink. Foods that require cleansing or draining are placed onto the flexile, perforated membrane. The flexile, perforated membrane will expand downward to its use configuration to accommodate the food, or the membrane can be manually depressed for lighter items. It is also possible to "pop" the membrane out to its use configuration by swinging the frame ping-pong paddle style with a sudden stop. The user then rinses the food with water which exits through the perforations into the sink. Lastly, the user lifts the strainer and empties its contents in a manner consistent with the prior art. The flexile, perforated membrane is manually returned to its original near-flat form, and the strainer can again be brought to it's storage configuration for washing and storage.

The stiffening ring/hinge combination enables a wavy "ripple" cross section of the membrane. This wavy cross-section, with rounded folds, should be contrasted with "accordion" or sharp-edged folds. This cross-section allows for two advantages: easier moldability of the holes and better exposure of the surfaces of the collapsed strainer to the cleansing jets in a dishwasher. Accordion-like folds would not accommodate the addition of drainage holes without sacrificing durability and quality. In addition, these accordion-like features collapse tightly together when compacted which would not adequately expose the surfaces of the strainer to the benefits of a dishwasher's high temperature cleansing jets.

The unique "ripple and ring" feature developed for our collapsible strainer basket solves these problems. The design allows for multiple drainage holes to be placed from top to bottom of the expanded basket. When flattened, the surfaces and holes remain exposed in a dishwasher for optimum cleansing. The stiffening rings added to the bottom of each ripple allow the basket to flex open and closed while retaining a uniform shape.

## Claims

1. A strainer (10), comprising a flexile, perforated membrane (12), **characterized by** the membrane (12) including at least one stiffening ring (20, 22) formed in a wavy, medial portion (24) of the membrane (12).

2. The strainer (10) of Claim 1 where the membrane (12) is integrally formed of an elastomeric material and has at least two selectable configurations.

3. The strainer (10) of Claim 2 where the two selectable configurations are a near-flat storage configuration and an extended use configuration.

4. The strainer (10) of any preceding claim where the membrane (12) has circular cross-sections about a central axis (18).

5. The strainer (10) of any preceding claim with the membrane (12) supported by a rigid support frame (14) about a perimeter of the membrane (12).

6. The strainer (10) of any preceding claim with at least one hinge (32, 34, 36, 38) formed in the membrane (12) adjacent the stiffening ring (20, 22).

7. The strainer (10) of claim 6 with the stiffening ring (20, 22) having inner (25, 28) and outer (26, 30) sides, and with at least two hinges (32, 34, 36, 38), one hinge on each of the inner and outer sides of the stiffening ring (20, 22).

8. The strainer (10) of any preceding claim with the membrane (12) including at least two stiffening rings (20, 22) formed in a medial portion (24) of the membrane (12).

9. The strainer (10) of claim 5, or any of claims 6 to 8 when dependent on claim 5, with a radially-extending handle connected to the support frame (14).

## Patentansprüche

1. Ein Sieb (10), bestehend aus einer flexiblen perforierten Membran (12), **gekennzeichnet durch** die Membran (12), einschließlich mindestens eines Versteifungsrings (20, 22), der in einem gewellten mittleren Teil (24) der Membran (12) ausgebildet ist.

2. Das Sieb (10) aus Anspruch 1, wobei die Membran (12) ganzheitlich aus einem elastomeren Material geformt ist und mindestens zwei mögliche Konfigurationen hat.

3. Das Sieb (10) aus Anspruch 2, wobei die beiden möglichen Konfigurationen eine fast flache Aufbewahrungskonfiguration und eine ausgedehnte Gebrauchskonfiguration sind.

4. Das Sieb (10) aus einem der vorhergehenden Ansprüche, wobei die Membran (12) kreisförmige Querprofile um eine zentrale Achse (18) aufweist.

5. Das Sieb (10) aus einem der vorhergehenden Ansprüche, wobei die Membran (12) von einem steifen Befestigungsrahmen (14) um einen Außenrand der Membran (12) gehalten wird.

6. Das Sieb (10) aus einem der vorhergehenden Ansprüche, wobei in der Membran (12) neben dem Versteifungsring (20, 22) mindestens ein Gelenkband (32, 34, 36, 38) ausgebildet ist.

7. Das Sieb (10) aus Anspruch 6, wobei der Versteifungsring- (20, 22) eine Innenseite (25, 28) und eine Außenseite (26, 30) und mindestens zwei Gelenkbänder (32, 34, 36, 38) hat, wobei sich an der Innen- und Außenseite des Versteifungsrings (20, 22) jeweils ein Gelenkband befindet.

8. Das Sieb (10) aus einem der vorhergehenden Ansprüche, wobei die Membran (12) über mindestens zwei Versteifungsringe (20, 22) verfügt, die in einem mittleren Teil (24) der Membran (12) ausgebildet sind.

9. Das Sieb (10) aus Anspruch 5 oder einem der Ansprüche 6 bis 8, wenn abhängig von Anspruch 5, wobei ein sich radial erstreckender Griff an dem Befestigungsrahmen (14) angebracht ist.

## Revendications

1. Un filtre (10), comprenant une membrane perforée, souple (12), **caractérisée par** la membrane (12) incluant au moins un anneau raidisseur (20, 22) formé dans une partie médiane, ondulée (24) de la membrane (12).

2. Le filtre (10) selon la Revendication 1 où la membrane (12) est intégralement formée d'un matériau élastomère et a au moins deux configurations sélectionnables.

3. Le filtre (10) selon la Revendication 2 où les deux configurations sélectionnables sont une configuration de rangement presque plate et une configuration d'utilisation prolongée.

4. Le filtre (10) selon l'une quelconque des revendications précédentes où la membrane (12) a des sections transversales autour d'un axe central (18).

5. Le filtre (10) selon l'une quelconque des revendications précédentes où la membrane (12) supportée par une armature porteuse rigide (14) autour d'un périmètre de la membrane (12).

6. Le filtre (10) selon l'une quelconque des revendications précédentes avec au moins une charnière (32, 34, 36, 38) formée dans la membrane (12) adjacente à l'anneau raidisseur (20, 22).

7. Le filtre (10) de la Revendication 6 avec l'anneau raidisseur (20, 22) ayant des côtés intérieur (25, 28) et extérieur (26, 30), et avec au moins deux charnières (32, 34, 36, 38), une charnière sur chacun des côtés intérieur et extérieur de l'anneau raidisseur (20, 22).

8. Le filtre (10) selon l'une quelconque des revendications précédentes avec la membrane (12) incluant au moins deux anneaux raidisseurs (20, 22) formés dans une partie médiane (24) de la membrane (12).

9. Le filtre (10) selon la revendication 5, ou l'une quelconque des revendications 6 à 8 dépendant de la revendication 5, avec une poignée étendue radialement connectée à l'armature porteuse (14).
